# EUROPEAN PATENT SPECIFICATION

(11) **EP 3 231 783 B1**
(45) Date of publication and mention of the grant of the patent: **19.10.2022**
(21) Application number: 17165329.8
(22) Date of filing: 06.04.2017
(51) Int. Cl.: C04B 37/02, B32B 17/00, B32B 9/00, B32B 37/04, B44C 5/04, B44C 3/12, B44C 1/28, C04B 41/50, E04F 13/14, E04F 13/12, E04F 13/08, C04B 37/04, B32B 3/16, B32B 7/02, B32B 7/04, B32B 9/04, B32B 17/06, B32B 19/04, B32B 5/16

(54) **PROCESS FOR OBTAINING A MULTILAYER PLATE OF COMPOSITE MATERIAL**
VERFAHREN ZUR HERSTELLUNG EINER MEHRLAGIGEN PLATTE VON VERBUNDMATERIAL
PROCÉDÉ POUR OBTENIR UNE PLAQUE EN MATÉRIAU COMPOSITE MULTICOUCHE

(30) Priority: 11.04.2016 IT UA20162488
(43) Date of publication of application: 18.10.2017
(73) Proprietor: Paola Lenti S.r.l., 20129 Milano (MI) (IT)
(72) Inventor: LENTI, Paola, 20821 Meda (IT)
(74) Representative: Simino, Massimo

(56) References cited:
- EP-A1- 1 241 145
- DE-B- 1 011 349
- FR-A1- 2 588 550
- FR-A1- 3 017 614
- JP-A- H06 144 954

## Description

The present invention relates to a process for obtaining a multilayer plate made of a composite material, preferably but without limitation intended for use as a coating plate or a decorative plate.

According to a further aspect, not claimed, the present disclosure also relates to a multilayer plate made of a composite material obtained by the above process, preferably but without limitation intended for use as a coating plate or a decorative plate.

As used herein the term plate generally also encompasses elements such as tiles, tesserae, and the like.

As used herein, the term melting temperature, when related to an amorphous material, such as glass, shall be intended to designate a transition temperature from a solid phase to a liquid or substantially liquid phase, e.g. a highly flowing but not completely liquid phase. A similar meaning shall be assigned to the term melting.

Composite materials, i.e. materials obtained by joining different materials to form a material with improved properties are known to be used in industries such as building and furniture.

By mere way of example, laminate panels may be mentioned, in which the most valuable and expensive material is used in the surface layer only, i.e. the exposed outer layer, the rest of the panels being formed with a material of lower value, but having suitable structural resistance properties for a panel.

Generally, the layers are inseparably coupled using glues, resins and the like or using mechanical retaining or seaming members, such as rivets and screws.

It shall be noted in this respect that the use of mechanical retaining members is generally undesired as it affects the aesthetics of the plate of composite material so obtained, whereas the use of resins and glues may lead to problems associated with the loss of bonding strength and may cause color changes in the coupled layers if such layers are made of highly transparent materials.

JP H06-144954 A describes a decorative glazed volcanic stone plate obtained by spray coating the glaze on the plate surface, heating at 1100-1300°C to melt the glass and cooling to form a glassy coating.

FR 3 017 614 A1 describes a glazed ceramic crockery obtained by covering a porcelain plate with a glass sheet, heating to 830°C to melt the glass and cooling down.

DE 10 11 349 B describes the glazing of a ceramic part by preparing a solid sheet comprising a glazing powder and a binder, and applying said sheet on the ceramic part and heating at 600-1200°C. This document further mentions the lay-up of several glazing sheets.

FR 2 588 550 A1 describes an enamelling process for a lava stone comprising steps of providing a lava stone plate; depositing an adhesive layer of sodium silicate on said lava stone, e.g. with a penetrating aqueous solution; positioning a glass plate on the silicate coated lava stone; heating the assembly so that the glass sheet melts (850°C); and cooling down.

It shall be understood from the above that there is currently a strong need for a plate made of a composite material in which the different materials are coupled together in a simple, durable manner.

Therefore, the present invention is based on the problem of conceiving a process for obtaining a plate made of a composite material, and preferably but without limitation intended for use as a coating plate or a decorative plate, that has such structural and functional characteristics as to fulfill the above need, while obviating the above prior art drawbacks.

This problem is solved by a process for obtaining a multilayer plate made of a composite material as defined by the features of claim 1.

Further characteristics and advantages of the process for obtaining a multilayer plate made of a composite material according to the invention according to the invention will be apparent from the following description of a preferred exemplary embodiment thereof.

The process for obtaining a multilayer plate made of a composite material, preferably but without limitation intended for use as a coating plate or a decorative plate, comprises the steps of:
- providing at least a first base layer made of a material having a predetermined melting temperature;
- providing at least a second material in the solid state having a predetermined melting temperature, lower than the melting temperature of the material of said first base layer;
- positioning said second material in the solid state on the base layer to obtain a first intermediate product comprising said base layer and said second material in the solid state not adhered to each other;
- heating such first intermediate product up to a first heating temperature sufficient to cause the second material to melt, or at least considerably soften, on the base layer, and
- cooling said first intermediate product to cause the second melted material to solidify on the base layer thereby causing the formation of a first composite material in which said second material is adhered to the base layer due to the solidification that took place during cooling.

Said at least a base layer comprises lava stone.

More preferably, said at least a base layer consists of a lava stone layer. Tests proved that a first base layer formed with the above listed materials allows adhesion to be achieved between layers, and provides better finishing results in terms of quality and aesthetics, as compared with the use of a first base layer made of other materials, e.g. metal, ceramics or porcelain stoneware.

Said first base layer is in the form of a plate, a brick, a tile, a slab and the like.

Preferably, said at least a second material consists of glass, providing improved adhesion with said first base layer, as well as better finishing effects in terms of both quality and aesthetics.

The second material in the solid state which is positioned on the at least a base layer to form a first intermediate product is in the form of plates, rods, mosaic tiles and/or granules having a minimum size of 1 cm and/or potsherds.

Said step of heating said first intermediate is carried out by heating it up to a first heating temperature above 1000°C and below 1200°C, preferably at a first heating temperature of about 1030-1100°C.

Preferably, said step of heating is carried out while maintaining said first heating temperature to a sufficient level as to cause the second material to melt for a time of at least 10 minutes, preferably for a time of at least 20 minutes.

Preferably, said step of heating is carried out in such a manner that said at least a second material in the solid state attains said first heating temperature sufficient for melting after a time of at least 20 minutes, preferably after a time of 30-40 minutes.

Preferably, said step of heating is carried out in a furnace, more preferably a continuous furnace, through which the product to be heated moves from an inlet end to an outlet end, such that it will remain in the oven as long as it is required.

In view of the above discussion, a base layer is first provided and the second layer in the solid state is placed on top of said base layer, to form said first intermediate product, before being heated, preferably in a furnace. Heating causes the second material to melt, or at least considerably soften, on the base layer, and to cover its surface, preferably in a substantially uniform manner. The maintenance of said first heating temperature for the above indicated time interval will assist and cause the surface of the base layer to be covered. Later cooling with cause the previously melted or at least softened second material to solidify on the surface of the base layer, thereby allowing the two layers to adhere to each other and form a multilayer plate made of a composite material.

According to a further preferred embodiment, said first composite material obtained as described above may undergo an additional heating treatment to allow a third material in the solid state or multiple materials in the solid state to be added to the previously obtained plate of said first composite material.

Here the method of the invention will comprise the further additional steps of:
- providing at least a third material in the solid state having a predetermined melting temperature, lower than the melting temperature of the material of said first base layer;
- positioning such at least a third material in the solid state on said first composite material to obtain a second intermediate product comprising said first composite material and the third material in the solid state, not adhered to each other;
- heating the second intermediate product up to a second heating temperature, sufficient to cause said at least a third material in the solid state to melt or at least considerably soften on said first composite material and
- cooling said second intermediate product to cause the third melted material to solidify on said first composite material and form a second composite material in which the third material, said second material and the base material are adhered to each other due to the solidification that took place during cooling.

Preferably, said second heating temperature is at least equal to said first heating temperature, whereby during such second heating both said at least a third material in the solid state and said at least a second material are melted. Advantageously, this will cause said third material and the second material to interpenetrate as they simultaneously melt.

Preferably, said at least a third material consists of glass.

Preferably, said at least a third material in the solid state is in the form of plates, rods, mosaic tiles and/or granules having a minimum size of 1 cm and/or potsherds.

Preferably, said at least a third material in the solid state is of the same type as said second material.

Preferably, said second material in the solid state and/or said third material in the solid state comprise a plurality of plates, rods, mosaic tiles and/or granules having a minimum size of 1 cm and/or potsherds of different materials and/or materials of different colors, types, sizes and the like.

The multilayer plate made of a composite material and obtained from the method according to the invention comprises:
- at least a first base layer made of a material having a predetermined melting temperature and
- at least a second material having a predetermined melting temperature, lower than the melting temperature of the material of said first base layer,
wherein said at least a second material forms a coating layer adhered by melting and solidification on the base layer.

In said multilayer plate made of a composite material:
- the base layer comprises lava stone and
- said at least a second material preferably consists of glass.

The plate made of a composite material is formed with the above discussed process according to the invention

It will be appreciated from the above that the process of the invention can provide plates made of a composite material in which different overlapping layers are adhered to form a single layer without using glues, resins and the like or impact bonding methods, and without employing mechanical seaming or connection means and without requiring interlocking joints between the coupled parts.

A further advantage of the process and plates made of a composite material according to the present invention lies in the possibility of combining and joining different materials to obtain plates of composite material having different surface finishes.

Another advantage of the process and plates made of a composite material according to the present invention lies in the possibility of combining and joining different materials from a solid phase, to obtain surface effects and finishes that would not be obtained by spraying, dipping or equivalents coating methods.

## Claims

1. **Process for obtaining a multilayer plate of composite material comprising lava stone** intended to be preferably but not exclusively used as a coating plate or decorative plate, **characterized in that** it comprises the following steps:
- providing at least a base layer made of a first material comprising lava stone having a predetermined melting temperature;
- providing at least a second material in a solid state having a predetermined melting temperature lower than the melting temperature of the material of said first base layer wherein said at least a second material comprises glass;
- positioning said at least a second material in a solid state in the form of plates, rods, mosaic tiles and/or granules having a minimum size of 1 cm and/or potsherds on said at least a base layer to obtain a first intermediate product comprising said base layer and said second material not adhered to each other;
- heating said first intermediate product up to a first heating temperature higher than 1000 °C and lower than 1200 °C to cause the melting of said at least a second material in a solid state on said base layer, and
- cooling said first intermediate product to obtain the solidification of said at least a second melted material on said base layer with formation of a first composite material having said at least a second material adhered to said at least a base layer as a result of the solidification occurred during the cooling.

2. Process according to claim 1, wherein said at least a second material consists of glass.

3. Process according to any one of claims 1 to 2, wherein said step of heating said first intermediate product is carried out by heating at a first heating temperature of about 1030-1100 °C.

4. Process according to any one of claims 1 to 3, wherein said heating step is carried out while maintaining said first heating temperature sufficient to cause the melting of said at least a second material for a time of at least 10 minutes, preferably for a time of at least 20 minutes.

5. Process according to any one of claims 1 to 4, wherein said heating step is carried out so that said at least a second material in a solid state reaches said first heating temperature sufficient to cause the melting of said at least a second material in a solid state after a time of at least 20 minutes, preferably after a time of 30-40 minutes.

6. Process according to any one of claims 1 to 5, comprising the further and subsequent steps of:
- providing at least a third material in a solid state having a predetermined melting temperature lower than the melting temperature of the material of said first base layer;
- positioning said at least a third material in a solid state on said at least a first composite material to obtain a second intermediate product comprising said first composite material in a solid state and said third composite material not adhered to each other;
- heating said second intermediate product to a second heating temperature sufficient to cause the melting of said at least a third material on said first composite material, and
- cooling said second intermediate product to obtain the solidification of said at least a third melted material and form a second composite material in which said at least a third material, said at least a second material and said at least a base layer are adhered to one another as a result of the solidification occurred during the cooling.

7. Process according to claim 6, wherein said second heating temperature is at least equal to said first heating temperature to cause a melting of both said at least a third material and of said at least a second material.

8. Process according to any one of claims 5 to 7, wherein said at least a third material in a solid state comprises glass, wherein said at least a third material in a solid state preferably consists of glass.

9. Process according to any one of claims 5 to 8, wherein in said first intermediate product, said at least a third material in a solid state is in the form of plates, rods, mosaic tiles, granules having a minimum size of 1 cm and/or potsherds.

## Patentansprüche

1. **Verfahren zum Erhalten einer mehrschichtigen Platte aus Lavastein umfassenden Verbundmaterial,** die vorzugsweise, aber nicht ausschließlich, als Beschichtungsplatte oder Dekorplatte verwendet werden soll, **dadurch gekennzeichnet, dass** es die folgenden Schritte umfasst:
- Bereitstellen mindestens einer Basisschicht, die aus einem ersten Material hergestellt ist, das Lavastein mit einer vorbestimmten Schmelztemperatur umfasst;
- Bereitstellen mindestens eines zweiten Materials in einem festen Zustand mit einer vorbestimmten Schmelztemperatur, die niedriger als die Schmelztemperatur des Materials der ersten Basisschicht ist, wobei das mindestens eine zweite Material Glas umfasst;
- Positionieren des mindestens einen zweiten Materials in einem festen Zustand in Form von Platten, Stäben, Mosaikfliesen und/oder Granulaten mit einer Mindestgröße von 1 cm und/oder Tonscherben auf der mindestens einen Basisschicht, um ein erstes Zwischenprodukt zu erhalten, das die Basisschicht und das zweite Material umfasst, die nicht aneinander haften;
- Erhitzen des ersten Zwischenprodukts bis auf eine erste Heiztemperatur höher als 1000 °C und niedriger als 1200 °C, um das Schmelzen des mindestens einen zweiten Materials in einem festen Zustand auf der Basisschicht zu bewirken, und
- Kühlen des ersten Zwischenprodukts, um die Verfestigung des mindestens einen zweiten geschmolzenen Materials auf der Basisschicht zu erhalten, unter Bildung eines ersten Verbundmaterials, bei dem das mindestens eine zweite Material an der mindestens einen Basisschicht als Ergebnis der Verfestigung haftet, die während des Kühlens stattgefunden hat.

2. Verfahren nach Anspruch 1, wobei das mindestens eine zweite Material aus Glas besteht.

3. Verfahren nach einem der Ansprüche 1 bis 2, wobei der Schritt zum Erhitzen des ersten Zwischenprodukts durch Erhitzen auf eine erste Heiztemperatur von etwa 1030-1100 °C durchgeführt wird.

4. Verfahren nach einem der Ansprüche 1 bis 3, wobei der Erhitzungsschritt durchgeführt wird, während die erste Heiztemperatur ausreichend gehalten wird, um das Schmelzen des mindestens einen zweiten Materials für eine Zeit von mindestens 10 Minuten, vorzugsweise für eine Zeit von mindestens 20 Minuten, zu bewirken.

5. Verfahren nach einem der Ansprüche 1 bis 4, wobei der Erhitzungsschritt so durchgeführt wird, dass das mindestens eine zweite Material in festem Zustand die erste Heiztemperatur erreicht, die ausreicht, um das Schmelzen des mindestens einen zweiten Materials in festem Zustand nach einer Zeit von mindestens 20 Minuten, vorzugsweise nach einer Zeit von 30-40 Minuten, zu bewirken.

6. Verfahren nach einem der Ansprüche 1 bis 5, umfassend die weiteren und nachfolgenden Schritte:
- Bereitstellen mindestens eines dritten Materials in einem festen Zustand mit einer vorbestimmten Schmelztemperatur, die niedriger als die Schmelztemperatur des Materials der ersten Basisschicht ist;
- Positionieren des mindestens einen dritten Materials in einem festen Zustand auf dem mindestens einen ersten Verbundmaterial, um ein zweites Zwischenprodukt zu erhalten, das das erste Verbundmaterial in einem festen Zustand und das dritte Verbundmaterial, die nicht aneinander haften, umfasst;
- Erhitzen des zweiten Zwischenprodukts auf eine zweite Heiztemperatur, die ausreicht, um das Schmelzen des mindestens einen dritten Materials auf dem ersten Verbundmaterial zu bewirken, und
- Kühlen des zweiten Zwischenprodukts, um die Verfestigung des mindestens einen dritten geschmolzenen Materials zu erhalten und ein zweites Verbundmaterial zu bilden, in dem das mindestens eine dritte Material, das mindestens eine zweite Material und die mindestens eine Basisschicht als Ergebnis der Verfestigung, die während des Kühlens stattgefunden hat, aneinander haften.

7. Verfahren nach Anspruch 6, wobei die zweite Heiztemperatur mindestens gleich der ersten Heiztemperatur ist, um ein Schmelzen sowohl des mindestens einen dritten Materials als auch des mindestens einen zweiten Materials zu bewirken.

8. Verfahren nach einem der Ansprüche 5 bis 7, wobei das mindestens eine dritte Material in festem Zustand Glas umfasst, wobei das mindestens eine dritte Material in festem Zustand vorzugsweise aus Glas besteht.

9. Verfahren nach einem der Ansprüche 5 bis 8, wobei im ersten Zwischenprodukt das mindestens eine dritte Material in festem Zustand in Form von Platten, Stäben, Mosaikfliesen, Granulaten mit einer Mindestgröße von 1 cm und/oder Tonscherben vorliegt.

## Revendications

1. **Procédé pour obtenir une plaque en matériau composite multicouche comprenant de la pierre de lave** destinée à être utilisée de préférence mais non exclusivement comme plaque de revêtement ou plaque décorative, **caractérisé en ce qu'**il comprend les étapes suivantes :
- la fourniture d'au moins une couche de base faite d'un premier matériau comprenant de la pierre de lave ayant une température de fusion prédéterminée ;
- la fourniture d'au moins un deuxième matériau à l'état solide ayant une température de fusion prédéterminée inférieure à la température de fusion du matériau de ladite première couche de base, dans lequel ledit au moins un deuxième matériau comprend du verre ;
- le positionnement dudit au moins un deuxième matériau à l'état solide sous la forme de plaques, de tiges, de carreaux de mosaïque et/ou de granulés ayant une taille minimale de 1 cm et/ou de tessons sur ladite au moins une couche de base pour obtenir un premier produit intermédiaire comprenant ladite couche de base et ledit deuxième matériau non collés l'un à l'autre ;
- le chauffage dudit premier produit intermédiaire jusqu'à une première température de chauffage supérieure à 1000 °C et inférieure à 1200 °C pour provoquer la fusion dudit au moins un deuxième matériau à un état solide sur ladite couche de base, et
- le refroidissement dudit premier produit intermédiaire pour obtenir la solidification dudit au moins un deuxième matériau fondu sur ladite couche de base avec la formation d'un premier matériau composite ayant ledit au moins un deuxième matériau collé à ladite au moins une couche de base en raison de la solidification qui s'est produite pendant le refroidissement.

2. Procédé selon la revendication 1, dans lequel ledit au moins un deuxième matériau est constitué de verre.

3. Procédé selon l'une quelconque des revendications 1 à 2, dans lequel ladite étape de chauffage dudit premier produit intermédiaire est réalisée par chauffage à une première température de chauffage d'environ 1030 à 1100 °C.

4. Procédé selon l'une quelconque des revendications 1 à 3, dans lequel ladite étape de chauffage est réalisée tout en maintenant ladite première température de chauffage suffisante pour provoquer la fusion dudit au moins un deuxième matériau pendant une durée d'au moins 10 minutes, de préférence pendant une durée d'au moins 20 minutes.

5. Procédé selon l'une quelconque des revendications 1 à 4, dans lequel ladite étape de chauffage est réalisée de sorte que ledit au moins un deuxième matériau à l'état solide atteigne ladite première température de chauffage suffisante pour provoquer la fusion dudit au moins un deuxième matériau à l'état solide après une durée d'au moins 20 minutes, de préférence après une durée de 30 à 40 minutes.

6. Procédé selon l'une quelconque des revendications 1 à 5, comprenant les étapes supplémentaires et ultérieures de :
- fourniture d'au moins un troisième matériau à l'état solide ayant une température de fusion prédéterminée inférieure à la température de fusion du matériau de ladite première couche de base ;
- positionnement dudit au moins un troisième matériau à l'état solide sur ledit au moins un premier matériau composite pour obtenir un second produit intermédiaire comprenant ledit premier matériau composite à l'état solide et ledit troisième matériau composite non collés l'un à l'autre ;
- chauffage dudit second produit intermédiaire à une seconde température de chauffage suffisante pour provoquer la fusion dudit au moins un troisième matériau sur ledit premier matériau composite, et
- refroidissement dudit second produit intermédiaire pour obtenir la solidification dudit au moins un troisième matériau fondu et former un deuxième matériau composite dans lequel ledit au moins un troisième matériau, ledit au moins un deuxième matériau et ladite au moins une couche de base sont collés les uns aux autres en raison de la solidification qui s'est produite pendant le refroidissement.

7. Procédé selon la revendication 6, dans lequel ladite deuxième température de chauffage est au moins égale à ladite première température de chauffage pour provoquer une fusion à la fois dudit au moins un troisième matériau et dudit au moins un deuxième matériau.

8. Procédé selon l'une quelconque des revendications 5 à 7, dans lequel ledit au moins un troisième matériau à l'état solide comprend du verre, dans lequel ledit au moins un troisième matériau à l'état solide est constitué de préférence de verre.

9. Procédé selon l'une quelconque des revendications 5 à 8, dans lequel, dans ledit premier produit intermédiaire, ledit au moins un troisième matériau à l'état solide se présente sous la forme de plaques, de tiges, de carreaux de mosaïque, de granulés ayant une taille minimale de 1 cm et/ou de tessons.
